# EUROPEAN PATENT SPECIFICATION

(11) **EP 3 006 334 B1**
(45) Date of publication and mention of the grant of the patent: **18.07.2018**
(21) Application number: 14461575.4
(22) Date of filing: 06.10.2014
(51) Int. Cl.: B64C 39/02, B64C 39/10, B64D 5/00

(54) **A system and a method for connecting an all-wing carrier with parasite flying units**
System und Verfahren zur Verbindung eines Nurflügelträgers mit parasitären Flugeinheiten
Système et procédé pour relier un transporteur toute voilure avec des unités volantes parasite

(43) Date of publication of application: 13.04.2016
(73) Proprietor: Patents Factory Ltd. Sp. z o.o., 66-002 Zielona Gora (PL)
(72) Inventor: Paczkowski, Jacek, 65-043 Zielona Gora (PL); Nalewa, Tomasz, 65-043 Zielona Gora (PL); Kramek, Krzysztof, 65-043 Zielona Gora (PL)
(74) Representative: Kancelaria Eupatent.pl Sp. z.o.o

(56) References cited:
- EP-A2- 0 778 200
- WO-A2-2008/085536
- WO-A2-2014/011255
- US-A- 2 998 208
- US-A1- 2011 049 288
- US-A1- 2013 200 207

## Description

### TECHNICAL FIELD

The object of the invention is a system and a method for connecting an all-wing carrier with parasite flying units.

### BACKGROUND

There are known flying units of all-wing type. They usually resemble a single wing of an aircraft that comprises its own propelling means. Such flying units have several advantages, the main of which is a relatively low mass. This, in consequence, results in low fuel or energy consumption and low manufacturing costs when compared to classic flying units. The all-wing type units can be in form of UAVs (Unmanned Aerial Vehicles), which further emphasizes these advantages, and also eliminates the risk of death of the pilot.

The PCT application WO2001058756 discloses an aircraft of "all-wing" type, the flight of which can be controlled by controlling the thrust of its engines. Such steering method can allow for the lower overall mass of the aircraft, as well as less complicated construction.

There is also known a use of all-wing type units as a carrier for other, smaller UAVs with own propelling means and energy sources. In such instance, these small UAVs are called 'parasites' and are connected for example to the lower surface of the carrier, so that they can be easily detached when necessary. An example is known from WO2008/085536. A take-off of a flying unit and maneuvers during flight consume more energy than steady flight on the substantially same level. When the energy is in form of the fuel, this translates to overall higher initial mass of the flying unit. When the energy is form of the electrical energy, the take-off requires suitable capacity of the accumulator (thus dictates its initial mass) and longer recharging of said accumulator. These are serious constraints for a carrier with attached flying units, which should be as light as possible, and which should require possibly short take-off preparation time.

There is therefore a need to provide a system and method for connecting an all-wing carrier with parasite flying units that would provide more energy efficient operation of the carrier with parasite flying units.

### SUMMARY

There is presented a system, according to claim 1, for connecting an all-wing carrier with a parasite flying unit, wherein the carrier and the parasite flying unit are connected via energy distribution means configured to exchange energy bi-directionally, wherein the system further comprises a controller configured to control the direction of the flow and the amount of said energy.

Preferably, the energy is in the form of electric energy.

Preferably, the energy is in the form of fuel.

Preferably, the carrier and the parasite flying unit are connected using electromagnets cooperating with magnets.

Preferably, the carrier and the parasite flying unit are connected via multi-pin connectors.

Preferably, the carrier and the parasite flying unit are locked using a locking pin cooperating with a lock.

Preferably, the carrier is powered in part or completely by the parasite flying unit.

Preferably, the carrier and/or the parasite flying unit are propelled by hydrogen.

Preferably, the carrier and/or parasite flying unit are adapted to store the hydrogen in gaseous state.

There is also presented a method, according to claim 10, for connecting an all-wing carrier with parasite flying unit, characterized in that it comprises steps of: arranging the parasite flying unit in a position for connecting to the carrier, connecting the parasite flying unit to the carrier by connecting their energy distribution means configured to exchange energy bi-directionally.

Preferably, the step of connecting comprises the steps of: attracting magnets of the parasite flying unit to corresponding electromagnets of the carrier, inserting multi-pin connectors of the carrier into the parasite flying unit, connecting the energy distribution means of the carrier with the energy distribution means of the parasite flying unit, locking the carrier with the parasite flying unit using a locking pin cooperating with a lock.

### BRIEF DESCRIPTION OF DRAWINGS

These and other objects presented herein are accomplished by providing a system and method for connecting an all-wing carrier with parasite flying units. Further details and features of the present invention, its nature and various advantages will become more apparent from the following detailed description of the preferred embodiments shown in a drawing, in which:
Fig. 1 shows an all-wing flying unit in perspective view from above.
Fig. 2 shows an all-wing flying unit in perspective view from below.
Fig. 3 shows an all-wing flying unit in front view with all the parasite flying units.
Fig. 4 shows an all-wing flying unit in front view with one parasite detached.
Fig. 5a and Fig. 5b show exemplary embodiments of connection mechanisms in exploded view.
Fig. 6 shows the steps of a method according to the invention.
Fig. 7 shows a system according to the invention.

### DETAILED DESCRIPTION

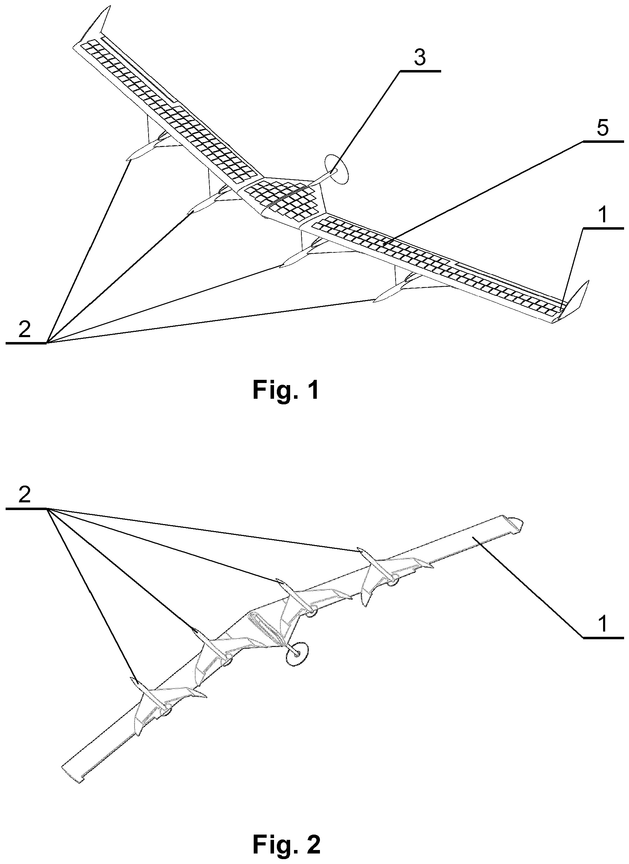

Figs. 1, 2 and 3 show an all-wing flying unit in perspective view from above, from below and in front view, respectively. The flying unit (the carrier) 1 is propelled by a single engine 3 located in the center. The parasite flying units 2 (small UAVs) are connected under a wing of the carrier, substantially in a symmetric configuration with respect to its longitudinal axis. In this case, there are two parasite flying units on the left side and two parasite flying units on the right side of the carrier. Such an arrangement results in a uniform drag distribution. Other configurations with different number of parasite flying units are also possible.

The carrier 1 comprises its own energy source 18. It can be a fuel in a fuel tank or electric energy in an accumulator. The carrier preferably comprises a solar cell 5 on the surface of the wing, so that the solar cell 5 can provide electric energy to the system, e.g. to power and recharge the accumulator at need.

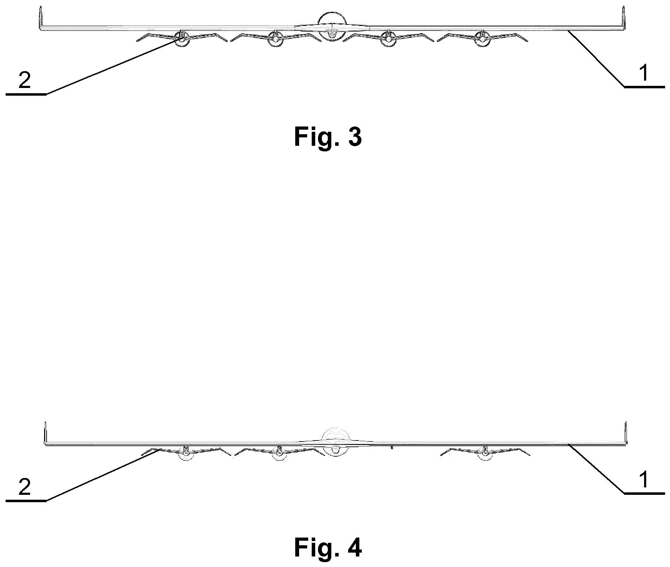

Fig. 4 shows an all-wing flying unit in front view with one parasite detached.

The parasite flying units 2 comprise their own propelling means and energy sources 28. Each parasite 2 comprises the energy source 28 that can power its propelling means for a longer period of time, e.g. during its mission after detachment from the carrier 1.

The carrier 1 can comprise a solar cell 5 and electrochemical reactor for producing hydrogen from water using solar energy. In this way, when the carrier and parasite flying units comprise engines powered by hydrogen, they can be powered directly by such obtained fuel in form of a hydrogen. The water can be obtained from the atmosphere (present e.g. in form of a steam). Such method of storing energy creates an advantage over conventional accumulators for electric energy, as the tanks for hydrogen substantially do not wear in time, in opposite to the accumulators, which have to be replaced every couple hundred charging cycles.

Furthermore, the hydrogen may be utilized to fill the insides of the carrier 1, or the carrier 1 and parasite flying units 2, replacing the air. By doing so, the overall weight of the system elements will be decreased. This will allow to further decrease the amount of energy needed to propel the carrier 1 with parasite flying units 2, or even possibly allow it to float in the air without the need to be propelled, as it is in case of aerostats. Such flying system can be used like a satellite, which requires a very small amount of the energy. Such solution can also allow for a wide range of useful speeds of the system. The hydrogen stored in the insides of the carrier 1, or parasite flying units 2, can be used to power the engines of the flying units, if there is a need for the system to act as a standard airplane. To implement such solution, at least part of the inside space of the carrier and/or the parasite flying units should be adapted to store the hydrogen in gaseous state., i.e. by choosing proper materials and providing necessary sealing. Hydrogen in both liquid and gaseous state can be used. If hydrogen in gaseous state is used, then in order for it to reduce the weight of the aircraft, it shall have the pressure equal to the atmospheric pressure or slightly higher, but not too high, such that at the flying height the density of the hydrogen shall be equal to the density of the air at that height, so that the hydrogen has the same weight as air. Therefore, by regulating the pressure of hydrogen, the buoyancy can be regulated. If hydrogen is to be used as a fuel, it shall be kept in a compressed or liquid state. If hydrogen is to be used as a buoyant, it shall be kept at atmospheric pressure or only slightly higher than atmospheric pressure. The construction of the aircraft may comprise containers for both compressed/liquid and air-pressure hydrogen.

According to the invention, the carrier 1 is adapted to draw energy from energy sources 28 of parasite flying units 2 e.g. during the take-off or performing maneuvers. Thus, the carrier 1 requires less energy to be stored in its own energy source 18. The energy is drawn from energy sources 28 of parasite flying units 2 to either support the carrier's energy source 18 or to temporarily replace its function completely. Conversely, the abundant energy from the carrier 1, after it recharged its accumulators or replenished its fuel, can be transferred to the parasite flying units 2 at need, e.g. during break in execution of their mission or upon returning from it.

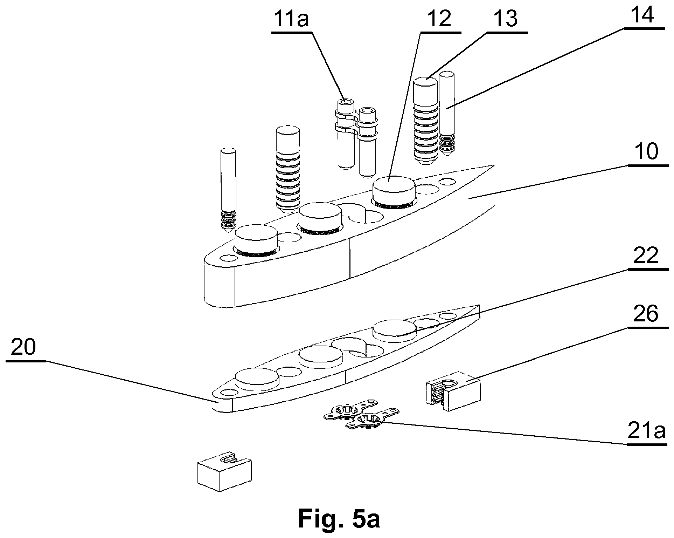

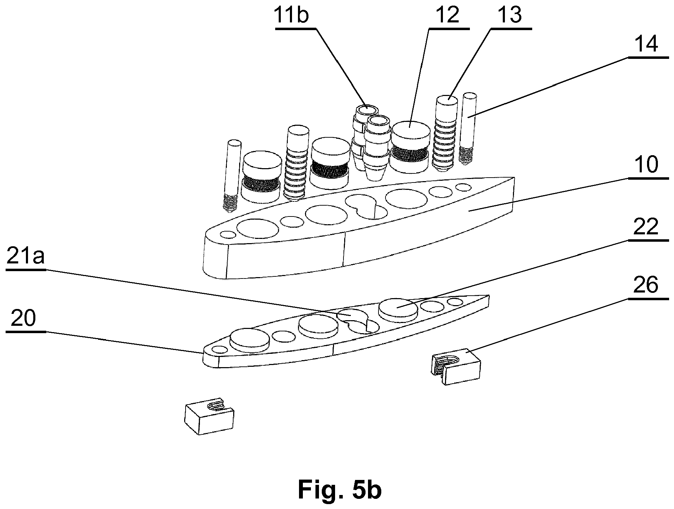

Fig. 5a and Fig. 5b show exemplary connection mechanisms for connecting the carrier 1 with parasite flying units 2 in exploded view. Carrier part 10 and parasite flying unit part 20 comprise energy distribution means 11a, 21a or 11b, 21b. Energy distribution means 11a, 21a, 11b, 21b provide a detachable connection allowing for exchanging energy bi-directionally. When the distributed energy is electric energy, carrier part 10 and parasite flying unit part 20 comprise the energy distribution means 11a, 21a in form of electric connections, as shown in Fig. 5a. When the energy is in form of a fuel as shown in Fig. 5b, carrier part 10 and parasite flying unit part 20 comprise the energy distribution means 11b, 21b, wherein the energy distribution means 11b, are e.g. in form of a plug, and the energy distribution means 21b are in form of a socket for said plug. In such case, the connection should be configured to prevent spillage. The connection mechanism further comprises multi-pin connectors 13 for providing control signals to the elements of the system. They can be also used for exchanging electric energy. The carrier 1 comprises electromagnets 12 arranged so that they can cooperate with magnets 22 placed in the parasite flying unit 2. When the electromagnets 12 are activated, they attract magnets of a near parasite flying unit 2 so that they connect in a secure manner, allowing for the control signals and energy distribution means 11a, 21a, 11b, 21b to operate safely. When it is intended to release parasite flying units 2 from the carrier 1, the electromagnets 12 change their polarization and repel magnets 22 of the parasites 2. Providing multiple electromagnets 12 and their corresponding magnets 22 allows for particular connection configuration, so that the rest of the elements and their sockets can align properly in desired way. After the electromagnets 12 connect to their appropriate magnets 22, the connection is locked using locking mechanism. It can be in form of a locking pin 14 being engaged by lock 26 so that the parasite flying unit 2 becomes locked with respect to the carrier 1.

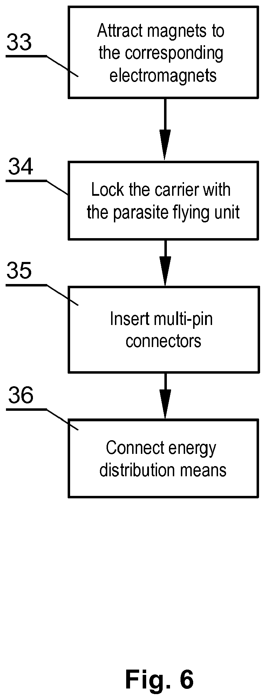

The method for connecting an all-wing carrier 1 with parasite flying unit 2 according to the invention comprises steps of arranging 31 the parasite flying unit 2 in a position for connecting to the carrier 1, e.g. moving it in vicinity of the carrier 2 so that they can be connected substantially without moving the parasite 2 with respect to the carrier 1 and vice versa, and then connecting 32 the parasite flying unit 2 to the carrier, so that the energy distribution means 11a, 21a, 11b, 21b are connected. Fig. 6 shows in more detail step of connecting 32. First, magnets 22 of the parasite flying unit 2 are attracted 33 to the corresponding electromagnets 12 of the carrier 1. Next locking pins 14 are inserted into parasite and locks 26 close 34. Next, multi-pin connectors 13 of the carrier 1 are inserted 35 into the parasite flying unit 2. Then the energy distribution means 11a, 11b of the carrier 1 are connected 36 with energy distribution means 21a, 21b of the parasite flying unit 2. After that, the carrier 1 is locked and fully connected with the parasite flying unit 2. The steps can be rearranged so as to better match particular design choices during the execution.

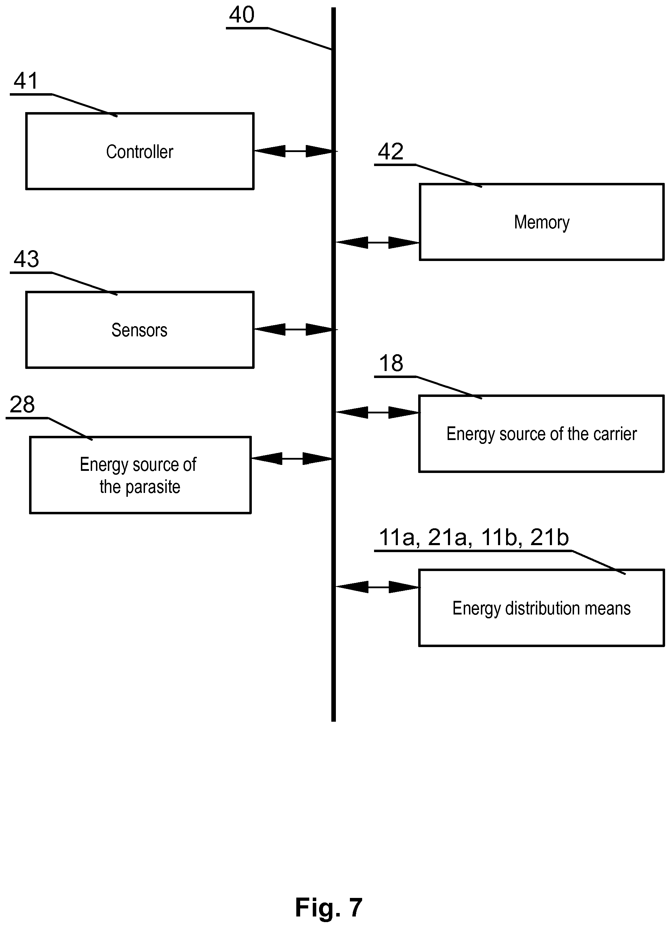

Fig. 7 presents the elements of the system. The carrier 1 comprises controlling means, e.g. controller 41, supported by sensors 43 for controlling its own energy source 18 and the energy sources 28 of parasite flying units 2, as well as their propelling means and flight control surfaces. The controller 41 is arranged to control drawing the energy from the parasite flying units 2, e.g. during the take-off or other high energy consuming maneuvers, and to distribute the energy back to parasite's, e.g. after recharging, e.g. using external tanker, a solar cell 5, solar cell 5 combined with electrochemical reactor producing hydrogen or other onboard energy producing means. The controller 41 also controls the energy distribution means and is configured to control direction of the flow and amount of said energy, as well as elements of the connection mechanism.

The controller 41 is configured to execute software that allows for energy distribution in an all-wing carrier for parasite flying units using steps of the method described above. The system comprises a data bus 40 for communicating, preferably bi-directionally, all circuits and/or elements of the system. Further, the system comprises a memory 42 for storing required software for the controller 41 and any temporary data needed for operation of the system.

The system and the method according to the invention can be utilized in pilotable manned or unmanned aircraft carriers carrying pilotable manned or unmanned parasite aircrafts.

The system and the method according to the invention can be utilized to compensate a malfunction of carriers energy source or its connection to the engine. In such case, the energy sources of parasite flying units can be utilized to completely take over the function of the carrier, for example to ensure safe return to the base. The same in case of malfunction of the engine of the carrier, the connections can be used to transfer fuel or energy from carrier tank or accumulator to parasites what allows use their engines in place of carrier engine. Thanks to that, the eventual cost of the destruction of the whole system is neutralized.

The system and the method can also be utilized to distribute energy during aerial refueling, wherein the carrier can distribute the fuel from the tanker directly to parasite flying units. Moreover, the carrier can function as a conventional tanker for aerial refueling, wherein it obtains the fuel from the atmosphere. Consequently, such tanker need not land in order to refuel.

The method and the system according to the invention allow for minimizing the size and weight of the accumulators or fuel tanks built into the carrier and/or the parasite flying units. Furthermore, the parasite flying units 2 can return to the carrier 1 after completed mission or during the execution of it, in order to refuel their tanks or recharge their accumulators.

## Claims

1. A system comprising an all-wing carrier (1) with a parasite flying unit (2), the carrier (1) and the parasite flying unit (2) are connected via energy distribution means (11a, 21a, 11b, 21b) **characterised in that** the energy distribution means (11a, 12a, 11b, 21b) is configured to exchange energy bi-directionally, so that the carrier (1) is adapted to draw energy from parasite flying unit (2) and the energy can be transferred from the carrier (1) to the parasite flying unit (2), and **in that** the system further comprises a controller (41) configured to control the direction of the energy flow and the amount of said energy transferred.

2. The system according to claim 1, wherein the energy is in the form of electric energy.

3. The system according to claim 1, wherein the energy is in the form of fuel.

4. The system according to any of preceding claims, wherein the carrier (1) and the parasite flying unit (2) are connected using electromagnets (12) cooperating with magnets (22).

5. The system according to any of preceding claims, wherein the carrier (1) and the parasite flying unit (2) are connected via multi-pin connectors (13).

6. The system according to any of preceding claims, wherein the carrier (1) and the parasite flying unit (2) are locked using a locking pin (14) cooperating with a lock (26).

7. The system according to claim 1, wherein the carrier (1) is powered in part or completely by the parasite flying unit (2).

8. The system according to claim 3, wherein the fuel is hydrogen and the carrier (1) and/or the parasite flying unit (2) are propelled by hydrogen.

9. The system according to claim 8, wherein the carrier (1) and/or parasite flying unit (2) are adapted to store the hydrogen in gaseous state.

10. A method for connecting an all-wing carrier (1) with parasite flying unit (2), comprising the steps of:
- arranging (31) the parasite flying unit (2) in a position for connecting to the carrier (1),
- connecting (32) the parasite flying unit (2) to the carrier by connecting their energy distribution means (11a, 21a, 11b, 21b) configured to exchange energy bi-directionally, so that the carrier (1) is adapted to draw energy from the parasite flying unit (2) and the energy can be transferred from the carrier (1) to the parasite flying unit (2),
- controlling the direction of the energy flow and the amount of said energy transferred by means of a controller (41).

11. The method according to claim 10, wherein the step of connecting (26) comprises the steps of:
- attracting (33) magnets (22) of the parasite flying unit (2) to corresponding electromagnets (12) of the carrier (1),
- inserting (34) multi-pin connectors (13) of the carrier (1) into the parasite flying unit (2),
- connecting (35) the energy distribution means (11a, 11b) of the carrier (1) with the energy distribution means (21a, 21b) of the parasite flying unit (2),
- locking (36) the carrier (1) with the parasite flying unit (2) using a locking pin (14) cooperating with a lock (26).

## Patentansprüche

1. System, umfassend einen Nurflügelträger (1) mit einer parasitären Flugeinheit (2), wobei der Träger (1) und die parasitäre Flugeinheit (2) über ein Energieverteilungsmittel (11a, 21a, 11b, 21b) verbunden sind, **dadurch gekennzeichnet, dass** das Energieverteilungsmittel (11a, 21a, 11b, 21b) so gestaltet ist, dass es Energie bidirektional austauscht, so dass der Träger (1) von der parasitären Flugeinheit (2) Energie beziehen kann und dass die Energie von dem Träger (1) zu der parasitären Flugeinheit (2) übertragen werden kann, und dass
das System ferner eine Steuereinrichtung (41) umfasst, die so gestaltet ist, dass sie die Richtung des Energieflusses und die Menge der übertragenen Energie steuert.

2. System nach Anspruch 1, wobei die Energie in Form von elektrischer Energie vorliegt.

3. System nach Anspruch 1, wobei die Energie in Form von Brennstoff vorliegt.

4. System nach einem der vorstehenden Ansprüche, wobei der Träger (1) und die parasitäre Flugeinheit (2) unter Verwendung von Elektromagneten (12) verbunden sind, die mit Magneten (22) zusammenwirken.

5. System nach einem der vorstehenden Ansprüche, wobei der Träger (1) und die parasitäre Flugeinheit (2) über Stiftleisten (13) verbunden sind.

6. System nach einem der vorstehenden Ansprüche, wobei der Träger (1) und die parasitäre Flugeinheit (2) unter Verwendung eines Sicherungsstifts (14) verriegelt sind, der mit einer Verriegelungseinrichtung (26) zusammenwirkt.

7. System nach Anspruch 1, wobei der Träger (1) teilweise oder ganz durch die parasitäre Flugeinheit (2) betrieben wird.

8. System nach Anspruch 3, wobei der Brennstoff Wasserstoff ist, und wobei der Träger (1) und/oder die parasitäre Flugeinheit (2) durch Wasserstoff angetrieben werden.

9. System nach Anspruch 8, wobei der Träger (1) und/oder die parasitäre Flugeinheit (2) den Wasserstoff in gasförmigem Zustand speichern können.

10. Verfahren zum Verbinden eines Nurflügelträgers (1) mit einer parasitären Flugeinheit (2), die folgenden Schritte umfassend:
- Anordnen (31) der parasitären Flugeinheit (2) an einer Position zur Verbindung mit dem Träger (1);
- Verbinden (32) der parasitären Flugeinheit (2) mit dem Träger durch Verbindung ihrer Energieverteilungsmittel (11a, 21a, 11b, 21b), die für einen bidirektionalen Energieaustausch gestaltet sind, so dass der Träger (1) von der parasitären Flugeinheit (2) Energie beziehen kann und dass die Energie von dem Träger (1) zu der parasitären Flugeinheit (2) übertragen wird;
- Steuern der Richtung des Energieflusses und der Menge der Energie durch einen Steuereinrichtung (41).

11. Verfahren nach Anspruch 10, wobei der Schritt des Verbindens (26) die folgenden Schritte umfasst:
- Anziehen (33) von Magneten (22) der parasitären Flugeinheit (2) an entsprechende Elektromagneten (12) des Trägers (1);
- Einführen (34) einer Stiftleiste (13) des Trägers (1) in die parasitäre Flugeinheit (2);
- Verbinden (35) des Energieverteilungsmittels (11a, 11b) des Trägers (1) mit dem Energieverteilungsmittel (21a, 21b) der parasitären Flugeinheit (2);
- Verriegeln (36) des Trägers (1) mit der parasitären Flugeinheit (2) unter Verwendung eines Sicherungsstifts (14) mit einer zusammenwirkenden Verriegelungseinrichtung (26).

## Revendications

1. Système comprenant un transporteur toute voilure (1) ayant une unité volante parasite (2), le transporteur (1) et l'unité volante parasite (2) étant reliés par l'intermédiaire d'un moyen de distribution d'énergie (11a, 21a, 11b, 21b), **caractérisé en ce que**
le moyen de distribution d'énergie (11a, 12a, 11b, 21b) est conçu pour échanger de l'énergie de façon bidirectionnelle, de sorte que le transporteur (1) puisse tirer de l'énergie de l'unité volante parasite (2) et l'énergie puisse être transférée du transporteur (1) à l'unité volante parasite (2), et **en ce que**
le système comprend en outre un dispositif de commande (41) conçu pour commander la direction du flux d'énergie et la quantité de ladite énergie transférée.

2. Système selon la revendication 1, l'énergie étant sous la forme d'énergie électrique.

3. Système selon la revendication 1, l'énergie étant sous la forme de carburant.

4. Système selon l'une quelconque des revendications précédentes, le transporteur (1) et l'unité volante parasite (2) étant reliés à l'aide d'électroaimants (12) coopérant avec des aimants (22).

5. Système selon l'une quelconque des revendications précédentes, le transporteur (1) et l'unité volante parasite (2) étant reliés par l'intermédiaire de connecteurs multi-broches (13).

6. Système selon l'une quelconque des revendications précédentes, le transporteur (1) et l'unité volante parasite (2) étant verrouillés à l'aide d'une goupille de verrouillage (14) coopérant avec un verrou (26).

7. Système selon la revendication 1, le transporteur (1) étant alimenté en totalité ou en partie par l'unité volante parasite (2).

8. Système selon la revendication 3, le carburant étant de l'hydrogène et le transporteur (1) et/ou l'unité volante parasite (2) étant propulsés par l'hydrogène.

9. Système selon la revendication 8, le transporteur (1) et/ou l'unité volante parasite (2) étant conçus pour stocker l'hydrogène à l'état gazeux.

10. Procédé de liaison d'un transporteur toute voilure (1) à une unité volante parasite (2), comprenant les étapes consistant à :
disposer (31) l'unité volante parasite (2) dans une position de liaison au transporteur (1),
relier (32) l'unité volante parasite (2) au transporteur en reliant leur moyen de distribution d'énergie (11a, 21a, 11b, 21b) conçu pour échanger de l'énergie de façon bidirectionnelle, de sorte que le transporteur (1) puisse tirer de l'énergie de l'unité volante parasite (2) et l'énergie puisse être transférée du transporteur (1) à l'unité volante parasite (2),
commander la direction du flux d'énergie et la quantité de ladite énergie transférée au moyen d'un dispositif de commande (41).

11. Procédé selon la revendication 10, la liaison (26) comprenant les étapes consistant à :
attirer (33) des aimants (22) de l'unité volante parasite (2) sur des électroaimants (12) correspondants du transporteur (1),
insérer (34) les connecteurs multi-broches (13) du transporteur (1) dans l'unité volante parasite (2),
relier (35) le moyen de distribution d'énergie (11a, 11b) du transporteur (1) au moyen de distribution d'énergie (21a, 21b) de l'unité volante parasite (2),
verrouiller (36) le transporteur (1) avec l'unité volante parasite (2) à l'aide d'une goupille de verrouillage (14) coopérant avec un verrou (26).
